# EUROPÄISCHE PATENTSCHRIFT

(11) **EP 3 184 989 B1**
(45) Veröffentlichungstag und Bekanntmachung des Hinweises auf die Patenterteilung: **25.07.2018**
(21) Anmeldenummer: 16205304.5
(22) Anmeldetag: 20.12.2016
(51) Int. Cl.: G01N 21/03, B01L 3/00

(54) **KÜVETTE**
CUVETTE
CUVETTE

(30) Priorität: 23.12.2015 DE 102015122719
(43) Veröffentlichungstag der Anmeldung: 28.06.2017
(73) Patentinhaber: Analytik Jena AG, 07745 Jena (DE)
(72) Erfinder: MOORE, Thomas, 07751 Jena (DE); KNIPPSCHILD, Claus, 07745 Jena (DE); HENTSCHEL, Martin, 07749 Jena (DE)
(74) Vertreter: Koslowski, Christine Adelheid

(56) Entgegenhaltungen:
- WO-A1-2007/126389
- DD-A1- 107 783
- JP-A- H0 763 678
- US-A1- 2011 292 383

## Beschreibung

Die Erfindung betrifft eine Küvette zum Aufspannen flüssiger Probenlösungen, wie sie für optische Messungen in der Biotechnologie oder Molekularbiologie verwendet wird und gattungsgemäß aus der DE 20 2009 018 896 U1 bekannt ist.

Das optische Messen von Probenlösungen gehört besonders in der Biotechnologie oder Molekularbiologie zu den Standardverfahren. Das Auswerten von Wechselwirkungen elektromagnetischer Strahlung mit Molekülen oder Atomen in Probenlösungen, wie z. B. der Transmission, Reflexion, Absorption, Fluoreszenz oder Streuung, erlauben vielfältige Rückschlüsse auf Zusammensetzungen von Proben oder auf den Verlauf biochemischer Vorgänge.

Insbesondere die Bestimmung einer molaren Probenkonzentration der Probenlösung erfolgt in der Bioanalytik häufig über die Messung der Extinktion von monochromatischem Licht bestimmter Wellenlängen. Unter bestimmten Voraussetzungen gilt hier das Lambert-Beer'sche Gesetz, mit dem sich eine unbekannte Konzentration entweder direkt oder mittels einer Eichkurve ermitteln lässt.

Neben dem monochromatischen Licht und konstanten äußeren Bedingungen ist das Vorliegen einer idealen Probenlösung eine Voraussetzung zur Anwendung des Lambert-Beer'schen Gesetzes. Nur bei idealen Probenlösungen besteht zwischen der Extinktion und der Konzentration der Probe in der Probenlösung eine erforderliche lineare Abhängigkeit. Ideale Probenlösungen sind so gering konzentriert, dass zwischen den gelösten Molekülen noch keine Wechselwirkungen auftreten können, die zu nichtlinearen Abhängigkeiten führen könnten. Unter diesen Voraussetzungen ist die gemessene Extinktion proportional zur Konzentration und optischen Weglänge durch die Probenlösung (Schichtdicke). Eine ideale Probenlösung lässt sich herstellen, indem z. B. eine zu hohe Konzentration der Probe durch Verdünnen reduziert wird. Der Bereich der linearen Abhängigkeit kann auch erreicht werden, indem die Schichtdicke (z. B. durch Verwenden eines flacheren Probengefäßes) einer zu hoch konzentrierten Probe soweit reduziert wird, dass keine Wechselwirkungen mehr auftreten können.

Die Schichtdicke ist in der Regel durch die Abmessungen eines Probengefäßes festgelegt, mit dem die Probenlösung dem Messgerät zugeführt wird.

Als Probengefäße weit verbreitet sind Küvetten, bei denen die Probenlösung in einer Messkammer zwischen zwei optisch transparenten Seitenwänden aufgenommen wird.

Derartige Küvetten sind i. d. R. standardisiert, sodass deren Aufnahmevolumen ein Abstand der beiden optisch transparenten Seitenwände und damit eine Schichtdicke der Messkammer zugeordnet werden kann. Ein Nachteil derartiger Küvetten besteht darin, dass die standardisierten Volumeninhalte mit > 50 µl in der Regel zu groß sind für die in der Biotechnologie oder Molekularbiologie üblichen, sehr geringen Probenmengen von < 10 µl. Außerdem ist der Volumeninhalt festgelegt, sodass keine Veränderung der Schichtdicke möglich ist. Insbesondere bei Küvetten für kleine Probenvolumen, mit engen und tiefliegenden Messkammern, ist eine Reinigung kaum möglich. Deshalb sind diese Küvetten meistens als Einwegartikel konzipiert und nicht wiederverwendbar.

Aus dem Stand der Technik sind auch wiederverwendbare Küvetten für kleinere Probenmengen bekannt. Die von der Fa. HELLMA GmbH in der Offenlegungsschrift WO 2012/123395 A1 offenbarten und unter dem Namen "TrayCell" vertriebenen Küvetten sind für Probenvolumen von 0,7 - 10 µm geeignet. Gegenüber Standard-Küvetten sind diese Küvetten sehr aufwändig in der Herstellung und dementsprechend teuer.

Auch für Küvetten mit verschiedenen Schichtdicken lassen sich im Stand der Technik Lösungen finden. In der Offenlegungsschrift DE 198 26 470 A1 ist eine Küvette aus Kunststoff beschrieben, bei der die Messkammer einen rechteckigen Querschnitt im Seitenverhältnis von vorzugsweise 5:1 aufweist. Die vier Seitenwände der Messkammer sind optisch transparent, sodass die Küvette auch um 90° gedreht im Messgerät aufgenommen werden kann. Durch den rechteckigen Querschnitt der Messkammer kann die Probe auf einfache Weise in zwei Schichtdicken gemessen werden. Nachteilig ist das große Volumen der Messkammer von ≥ 50 µl. Die Küvette ist aus Kunststoff gefertigt. Wegen der geringeren Transparenz für UV-Strahlen ist sie weniger gut für Messungen mit der Wellenlänge von 220 nm geeignet. Die Küvette ist außerdem als Einwegartikel konzipiert und kann nicht wieder verwendet werden.

Ein anderes Konzept, bei dem kleine Volumina von Probenlösungen in unterschiedlichen Schichtdicken gemessen werden können, ist aus der DE 10 2007 019 695 A1 bekannt. Hierbei handelt es sich um eine Chip-Küvette in Form eines flachen, planaren Trägersubstrats, in das ein oder mehrere Messkammern und ein die Messkammern verbindendes Kanalsystem zur Aufnahme eines Probenvolumens eingebracht sind. Die Kanäle und Messkammern sind mit optisch transparenter Folie verschlossen. Die Messkammern einer Chip-Küvette können unterschiedlich tief ausgeführt sein, sodass eine Probe in unterschiedlichen Schichtdicken gemessen werden kann. Die Chip-Küvette ist als Einwegartikel konzipiert und kann nicht wiederverwendet werden.

Bei den vorgenannten Küvetten ist die Schichtdicke der Probenlösung durch die Dimensionierung einer Messkammer bestimmt, die durch einen Boden und Seitenwände gebildet ist und in die die Probenflüssigkeit eingefüllt wird. Die Messkammer bildet jeweils das Messvolumen.

Ein anderes Konzept für eine Küvette ist aus der DD 1077 83 B1 bekannt. Die beschriebene Küvette (dort Probenträger genannt) besteht aus zwei im Wesentlichen ebenen lichtdurchlässigen Platten, die auf ihren einander zugekehrten Flächen Oberflächenstrukturen aufweisen, die Messflächen (dort probentragende Bereiche) begrenzen. Die beiden Platten sind in einem definierten Abstand voneinander angeordnet, sodass die zwischen den Messflächen gebildeten Messvolumina seitlich nur durch Luft begrenzt sind. Zu den Messflächen ist ausgeführt, dass sich diese vorteilhaft in der gleichen Ebene befinden wie die übrigen Bereiche der Platte und von diesen durch ringförmige Nuten getrennt sind.

Vorteilhaft sind die Platten gegeneinander bewegbar ausgebildet und weisen mechanische Mittel zur gegenseitigen Lagefixierung auf. Die Küvette ist für kleinste Messvolumen von wenigen µl vorgesehen.

Auch bei einer aus der Offenlegungsschrift WO 01/14855 A1 bekannten Vorrichtung wird ein geringes Messvolumen der Probenlösung von ≤ 10 µl in Tropfenform zwischen zwei parallel gegenüberliegenden optischen Flächen aufgespannt und nur durch die Oberflächenspannung der Flüssigkeit in Form gehalten. Zur Änderung der Schichtdicke der Probenlösung kann der Abstand zwischen den optischen Flächen über einen steuerbaren Abstandshalter in drei Positionen variiert werden, wobei der Tropfen komprimiert oder im Rahmen der Oberflächenspannung auseinandergezogen werden kann. Die sich gegenüberliegenden optischen Flächen sind jeweils als erhabene Flächen an einem Schenkel ausgebildet, wobei die beiden Schenkel an einem ihrer beiden Enden miteinander über ein Scharnier verbunden sind. Die Vorrichtung ist aufklappbar, sodass die optischen Flächen zur Aufnahme der Probe frei zugänglich und leicht zu reinigen sind. Dadurch ist die Vorrichtung wiederverwendbar. Es ist bei dieser Lösung von einem erhöhten Aufwand für den Antrieb und die Steuerung der zueinander beweglichen optischen Flächen auszugehen. Außerdem können die verschiedenen Schichtdicken nur nacheinander gemessen werden, da zwischen den Messungen stets der Abstand zwischen den optischen Fläche geändert werden muss.

Aus der vorgenannten DE 20 2009 018 896 U1 ist eine Küvette bekannt, mit wenigstens einer Messfläche auf jedem von zwei Schenkeln (dort Arme), die über ein Drehgelenk miteinander verbunden sind. Mit dem Zuklappen der Küvette werden die Schenkel in eine Messposition geklappt, in der sich die zwei Messflächen mit einem Abstand zueinander parallel gegenüberliegen. Der Abstand ist geeignet, eine flüssige Probe zwischen den Messflächen zu halten. Im geschlossenen Zustand kann eine solche Küvette in ein optisches Messgerät so eingeführt werden, dass sie den Strahlengang des Messgerätes kreuzt und die flüssige Probe im Strahlengang positioniert wird. Es werden die verschiedensten Ausführungen einer Küvette abgehandelt, bei denen das Material und die Geometrie der Küvette oder auch die Oberfläche der Messflächen variiert werden. In jedem Fall handelt es sich jedoch bei den Messflächen jeweils um eine Planfläche, sodass die Messflächen über den gesamten durch sie begrenzten Messbereich einen gleichen Abstand zueinander aufweisen. Der Abstand der beiden Messflächen kann bei der Herstellung der Küvette genau eingestellt werden, sodass die Küvette speziell für eine sich durch den eingestellten Abstand ergebende Dicke der Probe ausgelegt ist. Die Küvette kann einen, aber auch mehrere jeweils durch zwei Messflächen begrenzte Messbereiche aufweisen.

Die in den vorgenannten Schriften DD 1077 83 B1, WO 01/14855 A1 und DE 20 2009 018 896 U1 offenbarten Küvetten (Messplattenküvetten) haben die Gemeinsamkeit, dass die flüssige Probe als Tropfen (Tropfenvolumen) zwischen zwei Messflächen durch Grenzflächenspannung und Adhäsionskraft statisch gehalten wird. Die Grenzflächenspannungen bezeichnen Kräfte, die an der Grenze zwischen zwei verschiedenen Phasen wirken, die miteinander in Kontakt stehen, das heißt die beiden Phasen bilden eine gemeinsame Grenzfläche, die unter Grenzflächenspannung steht. Bei den in den vorgenannten Schriften offenbarten Küvetten gibt es jeweils zwei Grenzflächen zwischen dem Tropfen und einer Glasoberfläche und eine Grenzfläche zwischen dem Tropfen und einem Gas z.B. Luft. Die Grenzflächenspannung zwischen einer Flüssigkeit und einem Gas wird auch als Oberflächenspannung bezeichnet. Ein Volumen einer Flüssigkeit, welches allein durch Grenzflächenspannung und Adhäsionskraft zwischen Grenzflächen zusammengehalten wird stellt ein Tropfenvolumen dar. Ein Tropfenvolumen liegt im Bereich von 0,1 bis 10 µl.
Der Abstand zwischen den beiden Messflächen ist in Abhängigkeit von den Eigenschaften der Flüssigkeit und der Oberflächenbeschaffenheit der Messflächen auf einen Bereich von 100 mm bis 1,0 mm begrenzt, damit eine Tropfenvolumen zwischen den beiden Messflächen gehalten werden kann.

Im Unterschied hierzu folgen größere Volumina die eine Küvette in Form eines Behälters z.B. eines Kastens (Kastenküvette) statisch oder dynamisch befüllen, der inneren Form der Küvette, weshalb es keine zu beachtende Begrenzung nach oben für die Dimensionierung des Abstandes der Messflächen gibt.

Aufgabe der Erfindung ist es, eine konstruktiv einfachere Küvette zu finden, mit der die Messung einer Probenlösung im Tropfenvolumen in verschiedenen Schichtdicken möglich ist.

Erfindungsgemäß wird die Aufgabe für eine Küvette, bestehend aus einer ersten Planplatte mit einer ersten Innenfläche und einer zweiten Planplatte mit einer zweiten Innenfläche, gelöst. Die erste und zweite Innenfläche sind in einem geschlossenen Zustand der Küvette mit einem senkrechten Abstand parallel gegenüberliegend zueinander positioniert. Innerhalb der ersten Innenfläche ist wenigstens eine transparente erste Messfläche und innerhalb der zweiten Innenfläche ist wenigstens eine transparente zweite Messfläche vorhanden. Sie begrenzen jeweils paarweise einen Messraum, in dem eine flüssige Probenlösung durch ihre Grenzflächenspannung und Kapillarkräfte gehalten werden kann. Wenigstens die zweite Messfläche des Messraums ist eine gestufte Fläche. Sie weist wenigstens zwei miteinander über eine Setzfläche verbundene planparallele Teilmessflächen auf, sodass die Teilmessflächen zur ersten Messfläche unterschiedliche senkrechte Abstände aufweisen.

Vorteilhaft ist wenigstens eine der den Messraum begrenzenden Messflächen an einem optischen Element ausgebildet, das in die erste bzw. zweite Planplatte eingesetzt ist.

Das ist fertigungstechnisch besonders günstig, wenn die wenigstens zwei Teilmessflächen gegenüber der zweiten Innenfläche erhaben sind, sodass der Abstand zwischen der ersten und der zweiten Innenfläche größer als der erste Abstand zwischen der ersten Teilmessfläche und der ersten Messfläche und der zweite Abstand zwischen der zweiten Teilmessfläche und der ersten Messfläche ist.

Insbesondere, wenn die Teilmessflächen zeitgleich in einen Strahlengang eines Messgerätes gebracht werden sollen, ist es vorteilhaft, wenn die zweite Messfläche des Messraums kreisförmig ist und die Teilmessflächen Kreisausschnitte darstellen.

Sollen die Teilmessflächen nacheinander in einen Strahlengang eines Messgerätes gebracht werden, ist es von Vorteil, wenn die zweite Messfläche des Messraums rechteckig ist und die Teilmessflächen Rechtecke darstellen.

Damit ausschließlich durch die Teilmessflächen transmittierende Strahlung zum Messergebnis beiträgt, weist die Setzfläche eine reflektierende Beschichtung auf.

Auch kann wenigstens eine der beiden Messflächen, die den Messraum bilden, von einer Nut umschlossen sein, was fertigungstechnisch vorteilhaft ist, wenn die Messflächen unmittelbar an den Innenflächen der Planplatten ausgebildet sind.

Nachfolgend soll die Erfindung anhand von Ausführungsbeispielen näher erläutert werden. In den zugehörigen Zeichnungen zeigen:Fig. 1 den prinzipiellen Aufbau einer Küvette mit konkreter Darstellung einer ersten Ausführung des Messraumes, Fig. 2 eine Teilansicht des Messraumes in einer zweiten Ausführung und Fig. 3a - 3d Ansichten der zweiten Messfläche in verschiedenen Ausführungen.

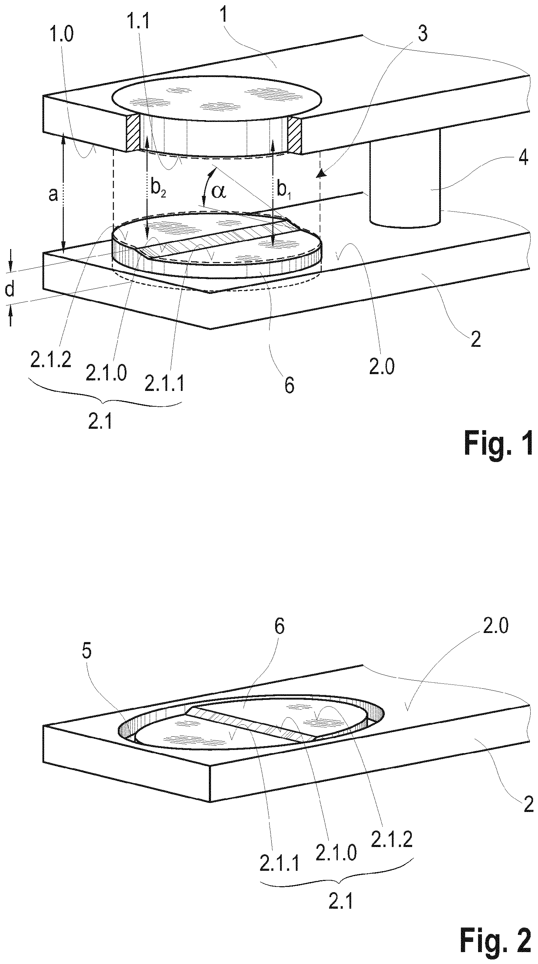

Die Küvette ist grundsätzlich wie in Fig. 1 gezeigt aufgebaut. Sie besteht aus einer ersten Planplatte 1 mit einer ersten Innenfläche 1.0 und einer zweiten Planplatte 2 mit einer zweiten Innenfläche 2.0. Die erste und zweite Innenfläche 1.0, 2.0 sind in einem geschlossenen Zustand der Küvette mit einem senkrechten Abstand a parallel gegenüberliegend zueinander positioniert. Innerhalb der ersten Innenfläche 1.0 ist wenigstens eine transparente erste Messfläche 1.1 und innerhalb der zweiten Innenfläche 2.0 ist wenigstens eine transparente zweite Messfläche 2.1 vorhanden. Die ersten und zweiten Messflächen 1.1, 2.1 begrenzen jeweils paarweise einen Messraum 3, in dem eine flüssige Probenlösung mit einem Tropfenvolumen durch Adhäsionskräfte und ihre Oberflächenspannung gehalten werden kann. Im Unterschied zum Stand der Technik stellt die zweite Messfläche 2.1 des Messraumes 3 eine gestufte Fläche dar, die durch wenigstens zwei miteinander über eine Setzfläche 2.1.0 verbundene planparallele Teilmessflächen 2.1.1, 2.1.2 gebildet ist, die jeweils mit einem senkrecht gegenüberliegenden Ausschnitt der ersten Messfläche 1.1 einen Teilmessraum bilden. Zur ersten Messfläche 1.1 weisen die wenigstens zwei Teilmessflächen 2.1.1, 2.1.2 unterschiedliche senkrechte Abstände b₁, b₂ auf.

Die beiden Abstände b1 und b2 müssen jeweils größer einem vorgegebenen minimalen Abstand und kleiner einem vorgegebenen maximalen Abstand sein, damit sich das Tropfenvolumen in beiden Teilmessräumen halten kann. Damit ergibt sich eine maximal zulässige Abstandsdifferenz die alle Teilmessflächen 2.1.1, 2.1.2 zueinander haben dürfen. Der vorgegebene minimale und der vorgegebene maximale Abstand liegen in Abhängigkeit von den Eigenschaften der Flüssigkeit und den Oberflächeneigenschaften der Messflächen 1.1, 1.2 in einem Bereich von 100 mm bis 1,0 mm.

Grundsätzlich kann zusätzlich die erste Messfläche 1.1 eine ebensolche gestufte Fläche wie die Messfläche 1.1 darstellen, was aber keinen erkennbaren Vorteil bringt, weshalb nachfolgend diese Möglichkeit außer Betracht gelassen wird.

Bevorzugt sind, wie in Fig. 1 gezeigt, die Abstände b₁ und b₂ kleiner als der Abstand a, damit die flüssige Probenlösung durch Kapillarkräfte zwischen den Messflächen 1.1, 2.1 gehalten wird.

Die Abstände b₁ und b₂ können jedoch auch größer oder einer kann gleich dem Abstand a sein kann, wenn, wie in Fig. 2 gezeigt, um wenigstens eine der beiden Messflächen 1.1, 2.1 eine geschlossene Nut 5 ausgebildet ist, womit die Innenflächen 1.0, 2.0 im Bereich der Nut 5 einen Abstand zueinander aufweisen, der größer ist als der Abstand a und die Abstände b₁ und b₂ ist.

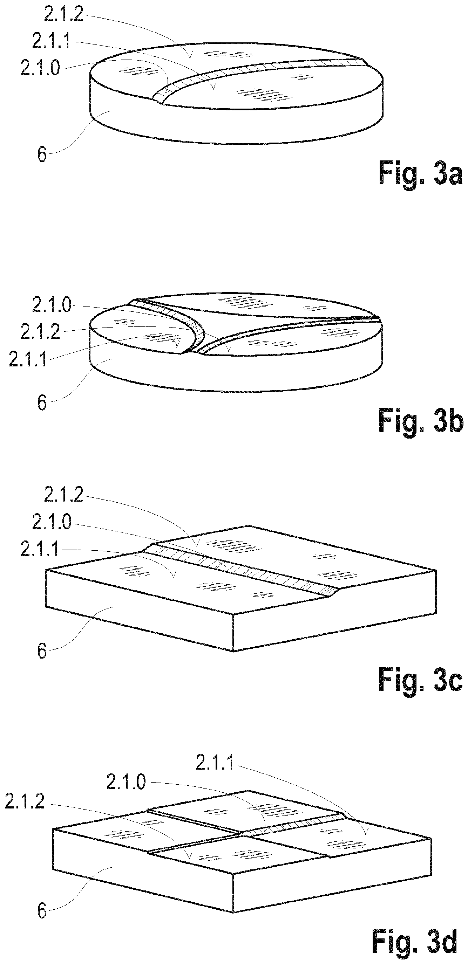

Die Messflächen 1.1, 2.1 können grundsätzlich eine beliebige Umfangsform aufweisen. Praktisch werden sie jedoch rechteckig, wie in den Fig. 3c und 3d, rund, wie in den Fig. 1, 2, 3a und 3b, oder oval ausgeführt. Rechteckig oder oval ist vorteilhaft, wenn die Teilmessräume nacheinander mit einer Messstrahlung beaufschlagt werden, während rund die beste Form ist, wenn beide Teilmessräume zeitgleich mit einer Messstrahlung durchsetzt werden sollen.

Im Falle, dass die Küvette mehrere Teilmessräume aufweist, sind diese vorteilhaft in einer Reihe angeordnet (nicht dargestellt). Dabei müssen alle Abstände bn der n Teilmessflächen 2.1.1, 2.1.2 größer als der vorgegebene minimale und kleiner als der vorgegebene maximale Abstand sein, das heißt in Summe dürfen sie die maximal zulässige Abstandsdifferenz nicht überschreiten

Die Messflächen 1.1, 2.1 können monolithisch aus den Planplatten 1, 2 herausgearbeitet sein, wenn diese aus einem optisch transparenten Material bestehen, oder aber an optisch transparenten Elementen ausgebildet sein, die in die Planplatten 1, 2 eingesetzt sind. Die Messflächen 1.1, 2.1 eines Messraumes 3 weisen eine gleiche Umfangsform auf.

Die Setzfläche 2.1.0 zwischen zwei benachbarten Teilmessflächen 2.1.1, 2.1.2 schließt mit diesen einen Winkel α ein der größer 5° und kleiner 35° ist. Kleiner 5° würde bei einem sinnvollen Unterschied der Abstände b1, b2 zueinander zu einer unnötig breiten Setzfläche 2.1.0 führen und größer 35° würde zum Platzen des durch das Tropfenvolumen gebildeten Tropfens führen. Über die Setzfläche 2.1.0 erfolgt die Aufteilung des Tropfenvolumens und das Überströmen zwischen den Teilmessflächen 2.1.1, 2.1.2. vom kleineren zum größeren Messabstand. Die Setzfläche kann hydrophob beschichtet sein, sodass es zu einer Tropfenteilung kommt. Das gesamte Tropfenvolumen befindet sich dann in den Teilmessräumen verteilt und ist für Messungen nutzbar. Über die Wahl des Winkels α kann in Abhängigkeit der Abstandsdifferenz der benachbarten Teilmessflächen 2.1.1, 2.1.2 die Breite der Setzfläche 2.1.0 bestimmt werden, womit der Abstand der Teilmessbereiche 2.1.1, 2.1.2 an externe Messbedingungen angepasst werden kann.

Die konkrete Größe des Tropfenvolumens einerseits und die Dimensionierung der Setzfläche 2.1.0 und der Teilmessflächen 2.1.1, 2.1.2, sowie deren Abstände b1, b2 und damit deren Abstandsverhältnis andererseits bedingen einander. Vorteilhaft ist am Übergang zwischen der Setzfläche 2.1.0 und einer Teilmessfläche 2.1.1, 2.1.2 eine Phase von kleiner als 0,1 mm x 45° ausgeführt.

In Fig. 1 ist eine erste Ausführung eines Messraumes 3 nicht maßstabsgerecht gezeigt. Die an der ersten Innenfläche 1.0 der ersten Planplatte 1 ausgebildete erste Messfläche 1.1 und die an der zweiten Innenfläche 2.0 der zweiten Planplatte 2 ausgebildete zweite Messfläche 2.1 sind kreisförmig ausgeführt. Die zweite Messfläche 2.1, die erfindungsgemäß durch eine gestufte Fläche gebildet ist, ist mittig geteilt, sodass die erste Teilmessfläche 2.1.1 und zweite Teilmessfläche 2.1.2, bei Vernachlässigung des Flächenbedarfes der Setzfläche 2.1.0, halbkreisförmige Kreisausschnitte sind. Die erste Messfläche 1.1 ist eben und mindestens gleich groß oder größer als die zweite Messfläche 2.1 ausgeführt. Der senkrechte erste Abstand b₁ zwischen der ersten Teilmessfläche 2.1.1 und der ersten Messfläche 1.1 ist größer als der senkrechte zweite Abstand b₂ zwischen der zweiten Teilmessfläche 2.1.2 und der ersten Messfläche 1.1. Damit die Planplatten 1, 2 im Arbeitszustand den Abstand a zueinander aufweisen, verfügt die Küvette über entsprechende Mittel, die aus dem Stand der Technik bereits vorbekannt sind und die im Anschluss an die Beschreibung der Ausführungsbeispiele des Messraumes 3 beschrieben werden.

Um in Fig. 1 die Sichtbarkeit der zweiten Messfläche 2.1 zu gewährleisten, sind die Abstände a, b₁ und b₂ übertrieben groß dargestellt. Unter realen Bedingungen würde bei sich parallel gegenüberstehender erster und zweiter Messfläche 1.1 und 2.1 die zweite Messfläche 2.1 von der ersten Planplatte 1 verdeckt werden.

In dem zwischen dem Paar aus erster und zweiter Messfläche 1.1 und 2.1 gebildeten Messraum 3 wird die flüssige Probenlösung aufgenommen. Die flüssige Probenlösung wird durch Kapillarwirkung und deren Oberflächenspannung zwischen den parallelen Messflächen 1.1 und 2.1 gehalten. Um die Verteilung der flüssigen Probenlösung auf den Messraum 3 zu begrenzen, muss der Abstand der Messflächen 1.1, 1.2 geringer sein als der zwischen den unmittelbar angrenzenden Flächen, die die Innenflächen 1.0, 2.0 oder die Bodenfläche wenigstens einer in einer der Innenflächen 1.0, 2.0 ausgebildeten Nut 5 sind. Durch die geringen ersten und zweiten Abstände b₁ und b₂ wird ein kleiner Messraum 3 gebildet, der entsprechend nur ein kleines Volumen von flüssiger Probenlösung von x - y µl erfordert. Die in die Küvette applizierte flüssige Probenlösung füllt vorteilhaft den gesamten Messraum 3 aus. Anderenfalls würden die im Bereich der zweiten Teilmessfläche 2.1.2 durch den geringeren zweiten Abstand b₂ stärkeren Kapillarkräfte das Volumen im Bereich der ersten Teilmessfläche 2.1.1 teilweise entleeren. Damit diese gegebenenfalls ohne Auswirkung für eine mit der Küvette durchgeführte Messung ist, werden die Teilmessräume so dimensioniert, dass die Messstrahlung bei nicht vollständig gefülltem Teilmessraum vollständig durch das Volumen der flüssigen Probenlösung geführt wird.

Die bevorzugt symmetrische Teilung der zweiten Messfläche 2.1 in die erste Teilmessfläche 2.1.1 und die zweite Teilmessfläche 2.1.2 erfolgt an der ebenen Setzfläche 2.1.0. Die Setzfläche 2.1.0 ist dann entlang des Durchmessers der zweiten Messfläche 2.1 angeordnet. Durch die Setzfläche 2.1.0 wird eine Differenz des ersten Abstands b₁ und des zweiten Abstands b₂ zwischen den Teilmessflächen 2.1.1 und 2.1.2 überbrückt. Die Setzfläche 2.1.0 ist in einem Winkel α von 35° ≥ α ≥ 5° zu den parallelen Teilmessflächen 2.1.1 und 2.1.2 angeordnet. Die Setzfläche 2.1.0 kann beschichtet sein, damit durch sie hindurch keine Strahlung dringen kann und ein Messergebnis ausschließlich durch die flüssige Probenlösung in den Teilmessräumen verursacht wird.

Im Vergleich zur Ausführung in Fig. 1, die bevorzugt hergestellt wird, indem ein optisches Element 6, an dem die zweite Messfläche 2.1 ausgebildet ist, in die zweite Planplatte 2 eingesetzt wird, ist in Fig. 2 um die zweite Messfläche 2.1 eine geschlossene Nut 5 ausgebildet und die zweite Messfläche 2.1 aus der zweiten Planfläche 2 herausgearbeitet. Vorteilhaft ist der Abstand b₁ größer dem Abstand a und der Abstand b₂, der stets kleiner dem Abstand b₁ ist, gleich oder ebenfalls größer dem Abstand a. Allerdings kann es schwierig sein, die beiden Teilmessflächen 2.1.1, 2.1.2, die dann gegenüber der zweiten Innenfläche 2.0 tiefer gesetzt sind, zu bearbeiten, z. B. zu polieren, weshalb es auch zweckmäßig sein kann, beide Teilmessflächen 2.1.1, 2.1.2 gegenüber der zweiten Innenfläche 2.0 erhaben auszuführen, indem die zweite Innenfläche 2.0 um die zweite Messfläche 2.1 herum abgetragen wird. Dann kann, wie in Fig. 1 gezeigt, auf die Nut 5 verzichtet werden.

Da die Setzfläche 2.1.0 keine optische Funktion hat, sondern nur die Teilmessflächen 2.1.1, 2.1.2 flächig verbinden soll, kann sie eine beliebige Oberflächenform aufweisen, wird praktisch jedoch plan, wie in Fig. 1 und 2, oder stetig gekrümmt, wie in den Fig. 3a und 3b gezeigt, ausgeführt.

Die Aufteilung der zweiten Messfläche 2.1 durch plane oder gekrümmte Setzflächen 2.1.0 kann auch in mehr als zwei Teilmessflächen 2.1.1, 2.1.2, mit anderen Geometrien der Teilmessflächen 2.1.1, 2.1.2 und in jedem beliebigen Größenverhältnis erfolgen, solange die Aufteilung zum Erfüllen einer Messaufgabe erforderlich ist.

Die in Fig. 3c und 3d gezeigten Messflächen 3 unterscheiden sich zu den beschriebenen durch ihre Außenkontur. Hier sind die an der ersten Innenfläche 1.0 der ersten Planplatte 1 ausgebildete erste Messfläche 1.1 und die an der zweiten Innenfläche 2.0 der zweiten Planplatte 2 ausgebildete zweite Messfläche 2.1 rechteckig ausgeführt. Die Setzfläche 2.1.0 verläuft linear und parallel zur Begrenzung der Messflächen 1.1 und 2.1, sodass die erste und zweite Teilmessfläche 2.1.1 und 2.1.2 ebenfalls rechteckig sind.

Die Ausführungen einer Küvette sind nicht auf die konkret dargestellten und beschriebenen Beispiele beschränkt. Die Außenkonturen der Messflächen 3, die Relativlagen der Teilmessflächen 2.1.1, 2.1.2 der zweiten Messfläche 2.1 zur zweiten Innenfläche 2.0, die Relativlage der ersten Messfläche 1.1 zur ersten Innenfläche 1.0, mit und ohne Nut 5 um die Messflächen 1.1, 2.1, die Ausführung der Setzflächen 2.1.0, sowie die Anzahl der Teilmessflächen 2.1.1, 2.1.2 und deren geometrische Aufteilung sind miteinander kombinierbar. Das heißt, es können weitere vorteilhafte Ausführungen der Küvette gebildet werden durch eine Kombination aus zuvor genannten Merkmalen verschiedener Messflächengeometrien und unterschiedlicher Arten und Anordnungen der Setzflächen 2.1.0. Selbstverständlich können auch andere Geometrien der Messflächen 1.1 und 2.1, wie z. B. Ellipsen, Ringe, Dreiecke usw., verwendet werden. Bei mehr als zwei Teilmessflächen 2.1.1, 2.1.2 ist es auch möglich, dass sich Setzflächen 2.1.0 schneiden oder von einem gemeinsamen Startpunkt auf der zweiten Messfläche 2.1 ausgehend zum Rand der zweiten Messfläche 2.1 verlaufen.

Allen Ausführungsbeispielen gemeinsam ist der aus dem Stand der Technik vorbekannte Grundaufbau der Küvette. Zum Messen einer flüssigen Probenlösung im Strahlengang eines Messgeräts stellt die Küvette ein Tropfenvolumen flüssiger Probenlösung bereit, das die Messstrahlung über eine definierte optische Weglänge durchläuft. Diese optische Weglänge wird gleich allen Küvetten des Standes der Technik durch die Wandstärke und den Abstand zweier gegenüberliegender Küvettenwände bestimmt.

Die Küvettenwände werden gemäß der Erfindung durch die erste und zweite Planplatte 1, 2 gebildet. Entsprechend ist die Wandstärke der Küvettenwand hier die Dicke d der Planplatten 1, 2 im Bereich der Messflächen 1.1, 2.1 bzw. des eingesetzten optischen Elementes 6, wie sie beispielhaft in Fig. 1 angegeben wurde.

Der geschlossene Zustand der Küvette wird hergestellt, indem die beiden Planplatten 1, 2 mit dem senkrechten Abstand zueinander positioniert und in diesem Zustand temporär fixiert werden.

Dazu können die zueinander positionierten Planplatten 1, 2 z. B. in eine handelsübliche Küvette, gebildet durch einen Messraum 3, eingeschoben oder durch eine Haltevorrichtung aufgenommen werden.

Die Planplatten 1, 2 können auch einseitig mechanisch miteinander verbunden sein. Über diese mechanische Verbindung kann eine solche häufig als Klappküvette bezeichnete Küvette in zwei Zustände gebracht werden. In einem geschlossenen Zustand, auch Arbeitszustand, sind die Planplatten 1, 2 mit ihren Innenflächen 1.0, 2.0 mit dem Abstand a
zueinander angeordnet und die flüssige Probenlösung kann im vorhandenen Messraum 3 gehalten werden. In einem geöffneten Zustand, auch Reinigungs- oder Befüllungszustand, sind die Messflächen 1.1, 2.1 gut zugängig, um sie zu reinigen oder eine flüssige Probenlösung aufzutragen. Der Abstand a kann durch eine Endlage der mechanischen Verbindung vorgegeben sein, dass heißt, die Planplatten 1, 2 lassen sich begrenzt durch den Bewegungsbereich der mechanischen Verbindung nicht weiter aufeinander zustellen als auf den Abstand a. Einfacher ist es jedoch, wenn zur Einhaltung des Abstandes a an wenigstens einer der beiden Planplatten 1, 2 ein Anschlag vorhanden ist, das können z. B. ein Rahmen, Rahmenelemente oder Abstandshalter 4 sein, die zwischen den Messflächen 1.1, 2.1 vorhanden sind.

Zur Ausführung der mechanischen Verbindung sind die unterschiedlichsten Lösungen bekannt. Entscheidend ist, dass die Innenflächen 1.0, 2.0 im zusammengeklappten Zustand parallel und im Abstand a zueinander angeordnet sind. Die einfachste
Verbindung ist ein monolithisches Gelenk zwischen den Planplatten 1, 2, vergleichbar mit einer Pinzette. Eine andere bekannte Möglichkeit ist die Verwendung eines Scharniers, bei dem die beiden Planplatten 1 und 2 über eine Drehachse miteinander verbunden sind. Es ist auch bekannt, die Planplatten 1, 2 mittels parallelogrammförmig angeordneter Schwenkarme zu verbinden, die zu beiden Seiten der Planplatten 1, 2 angeordnet sind.

Wie bereits ausgeführt, können die erste und zweite Messfläche 1.1 und 2.1 vorteilhaft an einer Stirnfläche jeweils eines zylindrischen optischen Elementes 6 angebracht sein. Jedes der optischen Elemente 6 ist an den Innenflächen 1.0 oder 2.0 einer der Planplatten 1, 2 in einer Durchgangsbohrung aufgenommen und befestigt, wobei die Durchgangsbohrungen die Durchtrittsöffnung für den Strahlengang des Messgeräts darstellen. Die Aufnahme erfolgt so, dass sich die Messflächen 1.1 und 2.1 gegenüberliegen und gegenüber den Innenflächen 1.0 und 2.0 erhaben sind. Durch die Erhabenheit ist gewährleistet, dass der Abstand a zwischen den Innenflächen 1.0 und 2.0 stets deutlich größer als die Abstände b₁ und b₂ zwischen den Messflächen 1.1 und 2.1 ist und dass die durch die Kapillarwirkung und die Oberflächenspannung zwischen den Messflächen 1.1 und 2.1 gehaltene flüssige Probenlösung nicht aus dem Messvolumen austreten kann. Ein weiterer Vorteil, die Messflächen 1.1, 2.1 an eingesetzten optischen Elementen 6 auszubilden, ist, dass diese unabhängig von der restlichen Küvette mit hoher Präzision und Oberflächengüte gefertigt werden können und erst anschließend in der Küvette befestigt werden. Die Planplatten 1, 2 können dann aus einem beliebigen stabilen Material hergestellt werden und müssen selbst nicht transparent sein.

Besonders vorteilhaft bestehen die zylindrischen optischen Elemente 6 aus Quarzglas und sind mittels Sol-Gel-Verfahren hergestellt. Quarzglas verfügt gegenüber transparenten Kunststoffen über bessere Transmissionseigenschaften bei Wellenlängen im UV-Bereich. Gegenüber herkömmlichen Verfahren bietet das Sol-Gel-Verfahren Vorteile zur kostengünstigen Herstellung einer Grundform des die zweite Messfläche 2.1 tragenden optischen Elements 6 mit den abgestuften Teilmessflächen 2.1.1, 2.1.2.

Da es zum Begrenzen des Messraums 3 bereits ausreichend ist, wenn nur die zweite Messfläche 2.1 von der zweiten Innenfläche 2.0 abgesetzt ist, kann auch ein Bereich der ersten Innenfläche 1.0 der ersten Planplatte 1 als erste Messfläche 1.1 verwendet werden. Dazu ist die erste Planplatte 1 transparent ausgeführt und komplett oder nur in dem betreffenden Bereich oberflächenbehandelt und eine erforderliche optische Qualität zu erhalten.

Durch eine unterschiedliche geometrische Ausführung der Teilmessflächen 2.1.1, 2.1.2 und deren Anordnung zueinander werden die dadurch begrenzten Teilmessräume geometrisch unterschiedlich ausgeführt und zueinander angeordnet. Für Messungen können die einzelnen Teilmessräume eines Messraumes 3 zeitlich nacheinander oder auch zeitgleich in einen Strahlenqang eines Messgerätes eingebracht werden.

### Bezugszeichenliste

- 1: erste Planplatte
- 1.0: erste Innenfläche
- 2: zweite Planplatte
- 2.0: zweite Innenfläche
- 1.1: erste Messfläche
- 2.1: zweite Messfläche
- 2.1.0: Setzfläche
- 2.1.1: erste Teilmessfläche
- 2.1.2: zweite Teilmessfläche
- 3: Messraum
- 4: Abstandshalter
- 5: Nut
- 6: optisches Element
- α: Winkel
- d: Dicke
- a: senkrechter Abstand zwischen der ersten und der zweiten Innenfläche 1.0, 2.0
- b₁: senkrechter erster Abstand zwischen der ersten Teilmessfläche 2.1.1 und der ersten Messfläche 1.1
- b₂: senkrechter zweiter Abstand zwischen der zweiten Teilmessfläche 2.1.2 und der ersten Messfläche 1.1

## Patentansprüche

1. Küvette, bestehend aus einer ersten Planplatte (1) mit einer ersten Innenfläche (1.0) und einer zweiten Planplatte (2) mit einer zweiten Innenfläche (2.0), wobei die erste und zweite Innenfläche (1.0, 2.0) in einem geschlossenen Zustand der Küvette mit einem senkrechten Abstand a parallel gegenüberliegend zueinander positioniert sind und innerhalb der ersten Innenfläche (1.0) wenigstens eine transparente erste Messfläche (1.1) und innerhalb der zweiten Innenfläche (2.0) wenigstens eine transparente zweite Messfläche (2.1) vorhanden sind, die paarweise einen Messraum (3) begrenzen, in dem eine flüssige Probenlösung mit einem Tropfenvolumen durch ihre Grenzflächenspannung und Kapillarkräfte gehalten werden kann, **dadurch gekennzeichnet, dass** wenigstens die zweite Messfläche (2.1) des Messraums (3) eine gestufte Fläche ist, die wenigstens zwei miteinander über eine Setzfläche (2.1.0) verbundene planparallele Teilmessflächen (2.1.1, 2.1.2) aufweist, sodass die Teilmessflächen (2.1.1, 2.1.2) zur ersten Messfläche (1.1) unterschiedliche senkrechte Abstände b₁, b₂ aufweisen, wobei die Setzfläche (2.1.0) mit den planparallelen Teilmessflächen (2.1 .1, 2.1 .2) einen Winkel (α) zwischen 5° und 35° einschließt.

2. Küvette nach Anspruch 1, **dadurch gekennzeichnet, dass** wenigstens eine der den Messraum (3) begrenzenden Messflächen (1.1, 2.1) an einem optischen Element (6) ausgebildet ist, das in die erste bzw. zweite Planplatte (1, 2) eingesetzt ist.

3. Küvette nach Anspruch 1 oder 2, **dadurch gekennzeichnet, dass** die wenigstens zwei Teilmessflächen (2.1.1, 2.1.2) gegenüber der zweiten Innenfläche (2.0) erhaben sind, sodass der Abstand a größer als der Abstand b₁ und der Abstand b2 ist.

4. Küvette nach Anspruch 1, **dadurch gekennzeichnet, dass** die zweite Messfläche (2.1) des Messraums (3) kreisförmig ist und die Teilmessflächen (2.1.1, 2.1.2) Kreisausschnitte darstellen.

5. Küvette nach Anspruch 1, **dadurch gekennzeichnet, dass** die zweite Messfläche (2.1) des Messraums (3) rechteckig ist und die Teilmessflächen (2.1.1, 2.1.2) Rechtecke darstellen.

6. Küvette nach Anspruch 1, **dadurch gekennzeichnet, dass** die Setzfläche (2.1.0) eine reflektierende Beschichtung aufweist.

7. Küvette nach einem der vorhergehenden Ansprüche, **dadurch gekennzeichnet, dass** wenigstens eine der beiden Messflächen (1.1, 2.1) des Messraums (3) von einer Nut (5) umschlossen ist.

## Claims

1. Cuvette consisting of a first planar plate (1) with a first inside surface (1.0) and a second planar plate (2) with a second inside surface (2.0), wherein, when the cuvette is in a closed state, the first and second inside surfaces (1.0, 2.0) are positioned opposite one another in a parallel manner at a vertical distance a, and wherein at least a transparent first measurement surface (1.1) is present within the first inside surface (1.0) and at least a transparent second measurement surface (2.1) is present within the second inside surface (2.0), said surfaces delimiting in pairs a measurement compartment (3) in which it is possible to hold a liquid sample solution with a drop volume by its interfacial tension and capillary forces, **characterized in that** at least the second measurement surface (2.1) of the measurement compartment (3) is a stepped surface, which has at least two plane-parallel partial measurement surfaces (2.1.1, 2.1.2), interconnected via a seating surface (2.1.0), such that the partial measurement surfaces (2.1.1, 2.1.2) have different vertical distances b₁, b₂ in relation to the measurement surface (1.0), wherein the seating surface (2.1.0) forms an angle (α) between 5° and 35° with the plane-parallel partial measurement surfaces (2.1.1, 2.1.2).

2. Cuvette as claimed in Claim 1, **characterized in that** at least one of the measurement surfaces (1.1, 2.1) delimiting the measurement compartment (3) is formed on an optical element (6), which is inserted into the first or second planar plate (1, 2).

3. Cuvette as claimed in Claim 1 or 2, **characterized in that** the at least two partial measurement surfaces (2.1.1, 2.1.2) are raised in relation to the second inside surface (2.0), such that the distance a is greater than the distance b₁ and the distance b₂.

4. Cuvette as claimed in Claim 1, **characterized in that** the second measurement surface (2.1) of the measurement compartment (3) is circular and the partial measurement surfaces (2.1.1) represent circular segments.

5. Cuvette as claimed in Claim 1, **characterized in that** the second measurement surface (2.1) of the measurement compartment (3) is rectangular and **in that** the partial measurement surfaces (2.1,1, 2.1.2) represent rectangles.

6. Cuvette as claimed in Claim 1, **characterized in that** the seating surface (2.1.0) has a reflective surface.

7. Cuvette as claimed in one of the previous claims, **characterized in that** at least one of the two measurement surfaces (1.1, 2.1) of the measurement compartment (3) is surrounded by a groove (5).

## Revendications

1. Cuvette constituée d'une plaque plane (1) présentant une première surface intérieure (1.0) et d'une deuxième plaque plane (2) présentant une deuxième surface intérieure (2.0), la première et la deuxième surface intérieure (1.0, 2.0) étant positionnées dans un état fermé de la cuvette à une distance perpendiculaire a, parallèlement l'une en face de l'autre, et au moins une première surface de mesure (1.1) transparente étant présente à l'intérieur de la première surface intérieure (1.0) et au moins une deuxième surface de mesure (2.1) transparente étant présente à l'intérieur de la deuxième surface intérieure (2.0), qui délimitent deux à deux un compartiment de mesure (3), dans lequel peut être maintenue une solution d'échantillon avec un volume de gouttes par sa tension interfaciale et ses forces capillaires, **caractérisée en ce qu'**au moins la deuxième surface de mesure (2.1) du compartiment de mesure (3) est une surface étagée, qui présente au moins deux surfaces de mesure partielles (2.1.1, 2.1.2) parallèles et planes, reliées entre elles par l'intermédiaire d'une surface d'assise (2.1.0), si bien que les surfaces de mesure partielles (2.1.1, 2.1.2) présentent des distances perpendiculaires b₁, b₂ différentes, la surface d'assise (2.1.0) formant un angle (α) compris entre 5° et 35° avec les surfaces de mesure partielles (2.1.1, 2.1.2) parallèles et planes.

2. Cuvette selon la revendication 1, **caractérisée en ce qu'**au moins l'une des surfaces de mesure (1.1, 2.1) délimitant le compartiment de mesure (3) est formée sur un élément optique (6), lequel est inséré dans la première ou la deuxième plaque plane (1, 2).

3. Cuvette selon la revendication 1 ou 2, **caractérisée en ce que** les au moins deux surfaces de mesure partielles (2.1.1, 2.1.2) sont en saillie par rapport à la deuxième surface intérieure (2.0), si bien que la distance a est supérieure à la distance b₁ et à la distance b₂.

4. Cuvette selon la revendication 1, **caractérisée en ce que** la deuxième surface de mesure (2.1) du compartiment de mesure (3) est circulaire et **en ce que** les surfaces de mesure partielles (2.1.1) représentent des secteurs circulaires.

5. Cuvette selon la revendication 1, **caractérisée en ce que** la deuxième surface de mesure (2.1) du compartiment de mesure (3) est rectangulaire et **en ce que** les surfaces de mesure partielles (2.1.1, 2.1.2) représentent des rectangles.

6. Cuvette selon la revendication 1, **caractérisée en ce que** la surface d'assise (2.1.0) présente un revêtement réfléchissant.

7. Cuvette selon l'une des revendications précédentes, **caractérisée en ce qu'**au moins l'une des deux surfaces de mesure (1.1, 2.1) du compartiment de mesure (3) est entourée par une rainure (5).
